Europäisches Patentamt

European Patent Office

Office européen des brevets

(19)

(11) Numéro de publication: **0 109 901**

**A1**

(12) **DEMANDE DE BREVET EUROPEEN**

(21) Numéro de dépôt: **83402207.1**

(22) Date de dépôt: **16.11.83**

(51) Int. Cl.³: **A 22 B 5/20**
**B 26 D 1/26**

(30) Priorité: **16.11.82 FR 8219160**

(43) Date de publication de la demande:
**30.05.84 Bulletin 84/22**

(84) Etats contractants désignés:
**BE CH DE LI NL**

(71) Demandeur: **SOCIETE DES ATELIERS DE CONSTRUCTIONS MECANIQUES LUCIEN DURAND**

**F-07120 Baix(FR)**

(72) Inventeur: **Durand, Lucien**
**Avenue de la Gare**
**F-07120 Baix(FR)**

(74) Mandataire: **Nony, Michel**
**Cabinet Nony 29, rue Cambacérès**
**F-75008 Paris(FR)**

(54) **Lame d'organe de coupe pour appareil à découper longitudinalement des carcasses d'animaux de boucherie.**

(57) L'invention est relative à une lame d'organe de coupe pour appareils à découper longitudinalement des carcasses d'animaux de boucherie, comprenant un corps de lame allongé prolongé à sa partie arrière par une queue de montage dans un bras porte-lame de l'organe de coupe, et un tranchant comprenant une arête de coupe.

Le tranchant comprend une arête de coupe formée d'un tronçon droit parallèle à l'axe longitudinal de la queue de montage et d'un tronçon incliné se raccordant audit tronçon droit et s'étendant vers l'intérieur du corps de lame, caractérisée par le fait que l'arête de coupe comporte un tronçon incliné (4'b) s'étendant depuis le bord frontal (9) de la lame et formant avec le tronçon droit (4'a) un angle (α) compris entre 140° et 175°, et, de préférence d'environ 160°.

Fig. 2

Lame d'organe de coupe pour appareil à découper longitudinalement
des carcasses d'animaux de boucherie.

La présente invention est relative à une lame d'organe de coupe pour
appareils à découper longitudinalement les carcasses d'animaux de boucherie
suspendues verticalement à une chaîne convoyeuse.

A la suite de l'abattage des animaux de boucherie, notamment des bovins
ou des porcins, les carcasses doivent être découpées longitudinalement
en deux parties aussi égales que possible tout en offrant une qualité de coupe
professionnellement satisfaisante, c'est-à-dire, exempte de fragments osseux
provenant de la découpe de la colonne vertébrale de l'animal.

La société déposante a déjà décrit dans ses brevets français 75 00678
et 75 11631 de tels appareils offrant une excellente qualité de découpe et
pouvant être intégrés à une chaîne de traitement de carcasses, l'opération de
découpe pouvant s'effectuer sans entraîner d'immobilisation de la carcasse.

les moyens mis en oeuvre dans les brevets mentionnés permettent en
particulier d'assurer une bonne égalité des deux parties découpées de la
carcasse grâce notamment aux moyens de guidage utilisés.

Les organes de coupe utilisés sont constitués de deux lames adjacentes
animées d'un mouvement alternatif, notamment par l'intermédiaire d'un
excentrique, leur permettant de frapper sensiblement en un même point la
carcasse à découper. L'organe de coupe est monté sur un support mobile
verticalement par rapport à la carcasse.

Les lames actuellement utilisées comportent un corps de lame allongé,
notamment en acier, prolongé à sa partie arrière par une queue ou soie de
montage dans un bras porte-lame de l'organe de coupe, et un tranchant
comprenant une arête de coupe droite parallèle à l'axe longitudinal de ladite
queue de montage, la totalité de l'arête de coupe étant ainsi en position
d'utilisation parallèle au bras porte-lame.

On constate cependant que dans certains cas, malgré les moyens mis en
oeuvre, des problèmes se posent en ce qui concerne la qualité de coupe au
niveau de l'apophyse, provoquant une dispersion d'esquilles d'os dans la viande

et nuisant donc dans une certaine mesure à la qualité de celle-ci.

On connaît par ailleurs d'après le brevet US 3829932 une lame dont l'arête de coupe présente à sa partie avant un tronçon droit prolongé par un tronçon incliné. L'expérience montre que de telles lames ne sont pas aptes à résoudre les problèmes liés à la qualité de coupe recherchée.

La présente invention se propose de fournir une lame pour organe de coupe qui, tout en étant de conception particulièrement simple et économique, permet d'assurer une qualité de coupe parfaite, notamment eu niveau de l'apophyse.

La présente invention a pour objet une lame d'organe de coupe pour appareils à découper longitudinalement des carcasses d'animaux de boucherie, comprenant un corps de lame allongé prolongé à sa partie arrière par une queue de montage dans un bras porte-lame de l'organe de coupe, et un tranchant comprenant une arête de coupe, formée d'un tronçon droit parallèle à l'axe longitudinal de la queue de montage et d'un tronçon incliné se raccordant audit tronçon droit et s'étendant vers l'intérieur du corps de lame, caractérisé par le fait que l'arête de coupe comporte un tronçon incliné s'étendant depuis le bord frontal de la lame et formant avec le tronçon droit un angle(α) compris entre 140° et 175°, et, de préférence d'environ 160°.

Les expériences réalisées avec les lames selon l'invention montrent que l'on obtient une qualité de coupe excellente tout en allégeant le poids des lames ce qui entraîne des sollicitations notablement moins fortes sur les bras porte-lame et le support mobile de l'organe de coupe.

Dans le but de mieux faire comprendre l'invention on va maintenant en décrire en se référant au dessin annexé deux exemples de mise en oeuvre nullement limitatifs.

Sur le dessin :
- La figure 1 représente en élévation une lame de conception traditionnelle,
- la figure 2 représente en élévation un premier mode de réalisation de lame selon l'invention,

- la figure 3 est une vue en bout arrière de la lame de la figure 2.

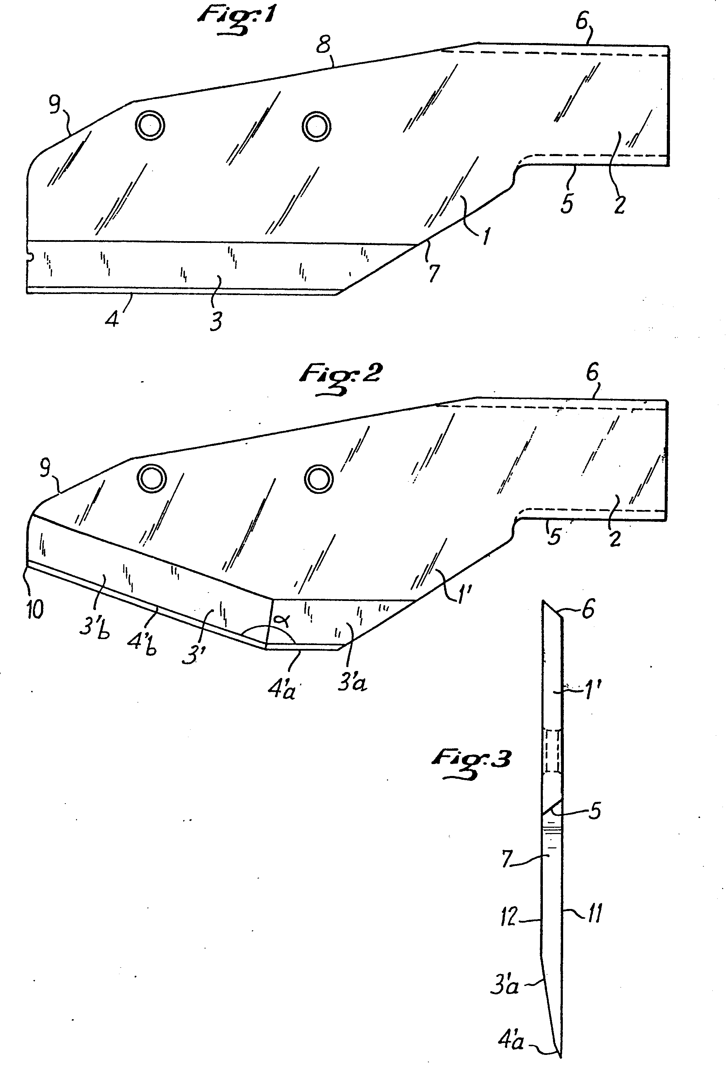

Comme on le voit sur la figure 1 une lame de coupe traditionnelle utilisable dans les appareils à découper les carcasses d'animaux de boucherie, tels que les appareils décrits dans les brevets français précités, comprend un corps de lame 1 muni à sa partie arrière d'une queue de montage 2 et présentant un tranchant 3 dont l'arête de coupe 4 est droite, décalée axialement par rapport à la queue de montage 2, et parallèle à l'axe longitudinal de la queue de montage 2 et à ses bords 5 et 6. Le corps de lame comporte un bord arrière de raccordement 7 s'étendant depuis l'arête 4 jusqu'au bord inférieur 5 de la queue de montage 2 et un bord supérieur 8 prolongé vers l'avant par un bord frontal arrondi 9.

Dans le mode de réalisation des figures 2 et 3 de la lame selon l'invention, le tranchant 3' du corps de lame 1' comporte deux zones 3'a et 3'b se terminant chacune par un tronçon d'arête 4'a et respectivement 4'b. Le tronçon d'arête de coupe incliné 4'b fait avec le tronçon droit 4'a un angle (α) d'environ 160°.

Ainsi dans un mode particulier de réalisation, on a selon l'invention remplacé une arête de coupe droite 4 d'une longueur de 260 mm d'un mode de réalisation traditionnel selon la figure 1, par un tronçon d'arête droit 4'a d'une longueur de 60 mm prolongé par un tronçon d'arête incliné 4'b dont la projection dans le plan de l'arête 4'a présente une longueur de 200 mm. La hauteur du point 10 représentant l'intersection du tronçon d'arête incliné avec le bord frontal de la lame, mesurée par rapport au prolongement de l'arête 4'b est de 70 mm. La longueur totale en projection du tranchant est toujours de 260 mm.

Comme on le voit sur la figure 3, la lame selon l'invention présente deux flancs parallèles 11, 12, le tranchant faisant avec ces flancs un angle d'environ 9° et l'arête de coupe faisant pour sa part avec lesdits flancs un angle d'environ 20°.

REVENDICATION DE BREVET

Lame d'organe de coupe pour appareils à découper longitudinalement des carcasses d'animaux de boucherie, comprenant un corps de lame allongé prolongé à sa partie arrière par une queue de montage dans un bras porte-lame de l'organe de coupe, et un tranchant comprenant une arête de coupe, formée d'un tronçon droit parallèle à l'axe longitudinal de la queue de montage et d'un tronçon incliné se raccordant audit tronçon droit et s'étendant vers l'intérieur du corps de lame, caractérisée par le fait que l'arête de coupe comporte un tronçon incliné (4'b) s'étendant depuis le bord frontal (9) de la lame et formant avec le tronçon droit (4'a) un angle (α) compris entre 140° et 175°, et, de préférence d'environ 160°.

0109901

*Fig:1*

*Fig:2*

*Fig:3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y,D | FR-A-2 307 471 (DURAND)<br>* figures 3-5; page 4, lignes 7-12 * | 1 | A 22 B    5/20<br>B 26 D    1/26 |
| Y | US-A-3 829 932 (GRISS)<br>* figure 4; colonne 3, lignes 40-48 * | 1 | |

| | | | DOMAINES TECHNIQUES RECHERCHES (Int. Cl. 3) |
|---|---|---|---|
| | | | A 22 B<br>B 62 D |

Le présent rapport de recherche a été établi pour toutes les revendications

| Lieu de la recherche<br>LA HAYE | Date d'achèvement de la recherche<br>21-02-1984 | Examinateur<br>VILBIG K |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82